# EUROPEAN PATENT APPLICATION

(11) **EP 3 150 885 A1**
(43) Date of publication of application: **05.04.2017**
(21) Application number: 15800386.3
(22) Date of filing: 15.05.2015
(51) Int. Cl.: F16J 15/06

(54) **SEALING STRUCTURE AND SEALING DEVICE**

(30) Priority: 29.05.2014 JP 2014111621
(71) Applicant: NOK Corporation, Tokyo 105-8585 (JP)
(72) Inventor: HATANO Makoto, Aso-shi Kumamoto 869-2231 (JP)
(74) Representative: TBK
(86) International application number: PCT/JP2015/064015
(87) International publication number: WO 2015/182408

(57) **Abstract**

The present invention provides a sealing structure and a sealing device that can maintain sealing properties even when there is shaft eccentricity and can maintain the sealing properties over a long time even in an environment where there is cyclic variation in fluid pressure.

A sealing device 100 includes an O-ring 10 and a back-up ring 20. The back-up ring 20 includes a body part 21, and an annular protruding portion 23 protruding toward a sealed fluid side (A) on a radially outer side of the body part 21. An inner circumferential surface of the body part 21 has a second tapered surface 22 capable of sliding on a first tapered surface 211 formed at the bottom of an annular groove 210, the second tapered surface 22 being capable of sliding within a range of the first tapered surface 211.

An inner circumferential surface of the annular protruding portion 23 has an inclined surface radially increasing toward the sealed fluid side (A).

## Description

### [Technical Field]

The present invention relates to a sealing structure and a sealing device that seal an annular gap between a shaft and a housing.

### [Background Art]

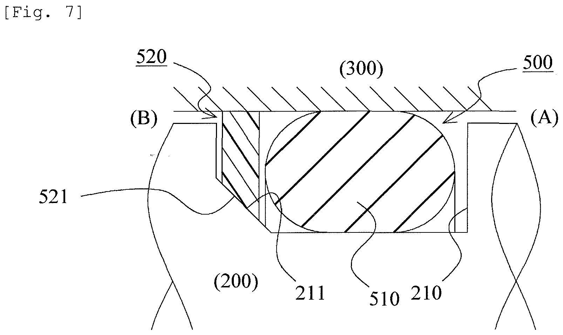

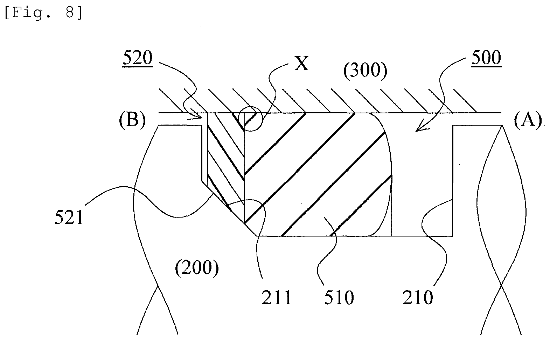

Sealing devices for use in a high-pressure environment having an O-ring made of a rubber-like elastic material and a resin back-up ring have widely been known. The sealing device according to a prior art example 1 will be described with reference to Fig. 7 and Fig. 8. Fig. 7 and Fig. 8 are schematic cross-sectional views of a sealing structure according to the prior art example 1. Fig. 7 shows a state where there is no difference in fluid pressure between both sides of the sealing device, while Fig. 8 shows a state where there is a difference in fluid pressure between both sides of the sealing device.

A sealing device 500 serves the function of sealing an annular gap between a shaft 200 and a housing 300. This sealing device 500 is mounted in an annular groove 210 formed in an outer circumferential surface of the shaft 200. The sealing device 500 is formed by an O-ring 510 made of a rubber-like elastic material, and a back-up ring 520 made of resin. The O-ring 510 is mounted in the annular groove 210 on a sealed fluid side (A), while the back-up ring 520 is mounted on the opposite side to the sealed fluid side (A) relative to the O-ring 510 in the annular groove 210. (Hereinafter, for convenience of explanation, the opposite side to the sealed fluid side (A) will be referred to as "opposite side (B)".) This back-up ring 520 serves the function of preventing the O-ring 510 from coming out of the annular groove 210.

In the sealing structure according to this prior art example, at the bottom on the opposite side (B) in the annular groove 210, there is provided a tapered surface 211 radially increasing from the sealed fluid side (A) to the opposite side (B). The inner circumferential surface of the back-up ring 520 is formed as a tapered surface 521 slidable on the tapered surface 211 provided at the bottom of the annular groove 210. Therefore, even when the distance between the bottom of the annular groove 210 and the inner circumferential surface of the shaft hole in the housing 300 varies by some eccentricity of the shaft 200, the back-up ring 520 can prevent formation of a gap between the back-up ring 520 and the tapered surface 211, and between the back-up ring 520 and the inner circumferential surface of the shaft hole in the housing 300, by moving along the axial direction. This way, the sealing device 500 and sealing structure according to this prior art example could maintain the sealing properties stably even in conditions where there was some eccentricity of the shaft 200.

However, when the sealing device 500 is used in an environment where there is cyclic variation in fluid pressure such as injector pipes, the O-ring 510 would suffer wear, resulting in deterioration of the sealing properties. This phenomenon will be explained below.

When there is no difference in fluid pressure between the sealed fluid side (A) and the opposite side (B), the inner and outer circumferential parts on the opposite side (B) of the O-ring 510 are separated from the back-up ring 520 (see Fig. 7). On the other hand, when the fluid pressure on the sealed fluid side (A) becomes higher than the fluid pressure on the opposite side (B), part of the O-ring 510 on the opposite side (B) undergoes deformation so that there is no longer a gap between the O-ring 510 and the back-up ring 520 (see Fig. 8). In an environment where there is cyclic variation in fluid pressure, the O-ring 510 undergoes such deformation repeatedly. It has been known that wear progresses in part X of the O-ring 510 shown in Fig. 8. This phenomenon occurs particularly evidently in an environment where the fluid pressure is higher on the sealed fluid side (A).

This is assumed to be because of part of the O-ring 510, which has been partly stretched and largely distorted, repeatedly colliding against the back-up ring 520 and the inner circumferential surface of the shaft hole in the housing 300. Since the back-up ring 520 and housing 300 have higher hardness and surface roughness than the O-ring 510, the O-ring 510 is considered to be more prone to wear.

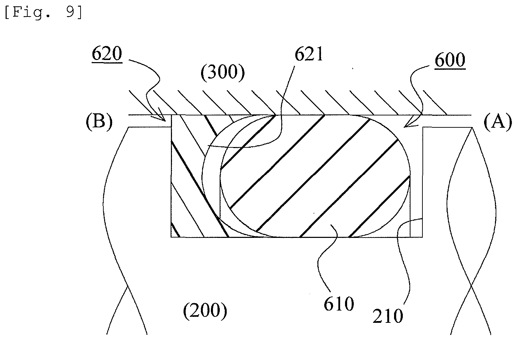

A technique for suppressing deformation of the O-ring subjected to fluid pressure has also been known. The sealing device according to a prior art example 2 will be described with reference to Fig. 9. Fig. 9 is a schematic cross-sectional view of a sealing structure according to the prior art example 2.

A sealing device 600 according to this prior art example is also mounted in an annular groove 210 formed in an outer circumferential surface of a shaft 200. This sealing device 600 is also formed by an O-ring 610 made of a rubber-like elastic material, and a back-up ring 620 made of resin. The O-ring 610 is mounted in the annular groove 210 on a sealed fluid side (A), while the back-up ring 620 is mounted on an opposite side (B) from the sealed fluid side (A) relative to the O-ring 610 in the annular groove 210.

In the sealing device 600 according to this prior art example, the back-up ring 620 has an end face formed as a curved surface with a circular arc cross section on the sealed fluid side (A). The arc has a radius of curvature that is about the same as the radius of the circular cross sectional shape of the O-ring 610. Therefore, when the O-ring 610 transforms from the state separated from the back-up ring 620 to the state in tight contact with the back-up ring 620, the O-ring 610 itself does not undergo a large deformation. Accordingly, the problem of wear on the O-ring is less likely to arise from cyclic variation in fluid pressure as with the prior art example 1.

However, when the distance between the bottom of the annular groove 210 and the inner circumferential surface of the shaft hole in a housing 300 varies by some eccentricity of the shaft 200, there is created a gap between the back-up ring 620 and the groove bottom, and between the back-up ring 620 and the inner circumferential surface of the shaft hole in the housing 300, in this sealing device 600. Accordingly, there is a possibility that part of the O-ring 610 gets caught between the back-up ring 620 and the groove bottom, or between the back-up ring 620 and the inner circumferential surface of the shaft hole in the housing 300, and damaged.

Moreover, the back-up ring 620 according to this prior art example has a shape with pointed edges on the sealed fluid side (A) both on the radially inner and outer sides. Therefore, there is another problem that it is hard to achieve a high dimensional accuracy of this back-up ring 620 that is formed by molding.

### [Citation list]

### [Patent Literature]

[PTL 1]
   Japanese Patent Application Laid-open No. H11-315925
[PTL 2]
   Japanese Patent Application Laid-open No. H11-72162
[PTL 3]
   Japanese Patent Application Laid-open No. 2006-336835
[PTL 4]
   Japanese Utility Model Application Laid-open No. S64-24766
[PTL 5]
   Japanese Utility Model Application Laid-open No. S59-165984

### [Summary of Invention]

### [Technical Problem]

An object of the present invention is to provide a sealing structure and a sealing device that can maintain sealing properties even when there is shaft eccentricity and can maintain the sealing properties over a long time even in an environment where there is cyclic variation in fluid pressure varies.

### [Solution to Problem]

The present invention adopts the following means to achieve the object noted above.

Namely, the sealing structure of the present invention is a sealing structure including
a shaft having an annular groove in an outer circumferential surface;
a housing having a shaft hole for the shaft to pass through; and
a sealing device mounted in the annular groove and sealing an annular gap between the shaft and the shaft hole, wherein
the annular groove includes a first tapered surface at a bottom on an opposite side to a sealed fluid side, the diameter of the first tapered surface increasing from the sealed fluid side to the opposite side,
the sealing device includes
an O-ring made of a rubber-like elastic material mounted on the sealed fluid side of the annular groove, and
a back-up ring that is made of resin, is mounted on the opposite side of the annular groove from the O-ring and prevents the O-ring from coming out of the annular groove,
the back-up ring includes an annular and planar body part, and an annular protruding portion protruding toward the sealed fluid side on a radially outer side of the body part,
an inner circumferential surface of the body part has a second tapered surface capable of sliding on the first tapered surface formed at the bottom of the annular groove, the second tapered surface being capable of sliding within a range of the first tapered surface, and
an inner circumferential surface of the annular protruding portion has an inclined surface whose diameter increases toward the sealed fluid side.

A sealing device that is mounted in an annular groove formed in an outer circumferential surface of a shaft and seals an annular gap between the shaft and a housing having a shaft hole for the shaft to pass through,
the annular groove including a first tapered surface at a bottom on an opposite side to a sealed fluid side, the diameter of the first tapered surface increasing from the sealed fluid side to the opposite side,
the sealing device comprising:
an O-ring made of a rubber-like elastic material mounted on the sealed fluid side of the annular groove; and
a back-up ring that is made of resin, is mounted on the opposite side of the annular groove from the O-ring and prevents the O-ring from coming out of the annular groove, wherein
the back-up ring includes an annular and planar body part, and an annular protruding portion protruding toward the sealed fluid side on a radially outer side of the body part,
an inner circumferential surface of the body part has a second tapered surface capable of sliding on the first tapered surface formed at the bottom of the annular groove, the second tapered surface being capable of sliding within a range of the first tapered surface, and
an inner circumferential surface that of the annular protruding portion has an inclined surface whose diameter increases toward the sealed fluid side.

According to the present invention, the annular groove includes a first tapered surface at a bottom on an opposite side to a sealed fluid side, the first tapered surface radially increasing from the sealed fluid side to the opposite side. The inner circumferential surface of the body part of the back-up ring is formed as a second tapered surface slidable on the first tapered surface. Therefore, even when the distance between the bottom of the annular groove and the inner circumferential surface of the shaft hole in the housing varies by some eccentricity of the shaft, the back-up ring can prevent formation of a gap between the back-up ring and the first tapered surface at the bottom of the annular groove, and between the back-up ring and the inner circumferential surface of the shaft hole in the housing, by moving along the axial direction.

The back-up ring in the present invention includes an annular protruding portion protruding toward the sealed fluid side on the radially outer side of the body part, and the inner circumferential surface of this annular protruding portion is formed as an inclined surface radially increasing toward the sealed fluid side. Therefore, when the O-ring makes tight contact with the back-up ring by the fluid pressure, an outer circumferential part on the opposite side to the sealed fluid side of the O-ring makes tight contact with the inclined surface of the annular protruding portion. The inner circumferential surface of the body part of the back-up ring in the present invention is formed as a second tapered surface slidable on the first tapered surface formed at the bottom of the annular groove within the range of the first tapered surface. Therefore, when the O-ring makes tight contact with the back-up ring by the fluid pressure, an inner circumferential part on the opposite side to the sealed fluid side of the O-ring makes tight contact with the first tapered surface provided at the bottom of the annular groove.

Accordingly, even when the O-ring transforms from the state separated from the back-up ring to the state in tight contact with the back-up ring, the O-ring can be prevented from undergoing a large deformation. Therefore, wear of the O-ring is prevented even when the sealing device is used in an environment where there is cyclic variation in fluid pressure.

### [Advantageous Effects of Invention]

As described above, according to the present invention, sealing properties can be maintained even when there is shaft eccentricity, and the sealing properties can be maintained over a long time even in an environment where there is cyclic variation in fluid pressure.

### [Brief Description of Drawings]

[Fig. 1]

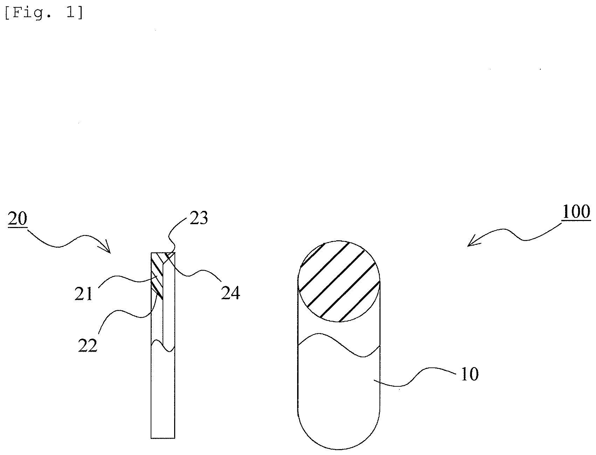

   Fig. 1 is a schematic cross-sectional view of a sealing device according to Embodiment 1 of the present invention.
[Fig. 2]

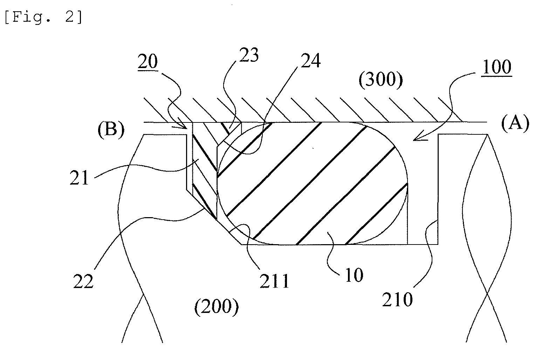

   Fig. 2 is a schematic cross-sectional view of the sealing structure according to Embodiment 1 of the present invention.
[Fig. 3]

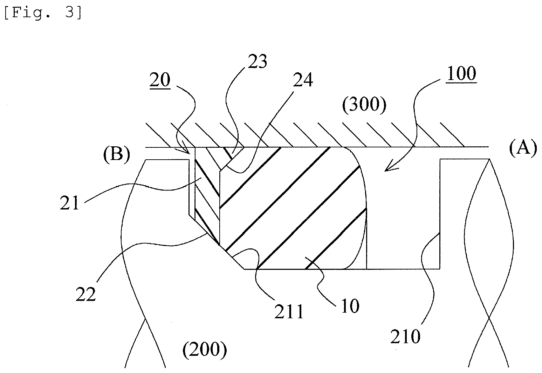

   Fig. 3 is a schematic cross-sectional view of the sealing structure according to Embodiment 1 of the present invention.
[Fig. 4]

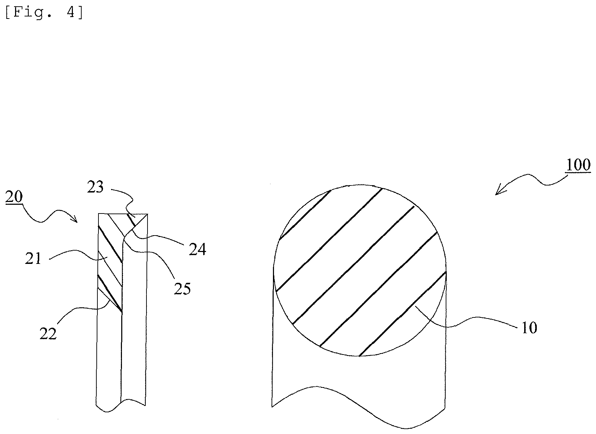

   Fig. 4 is a schematic cross-sectional view of a sealing device according to Embodiment 2 of the present invention.
[Fig. 5]

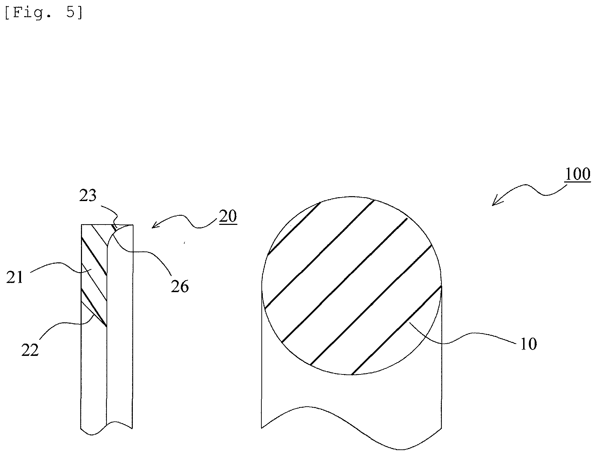

   Fig. 5 is a schematic cross-sectional view of a sealing device according to Embodiment 3 of the present invention.
[Fig. 6]

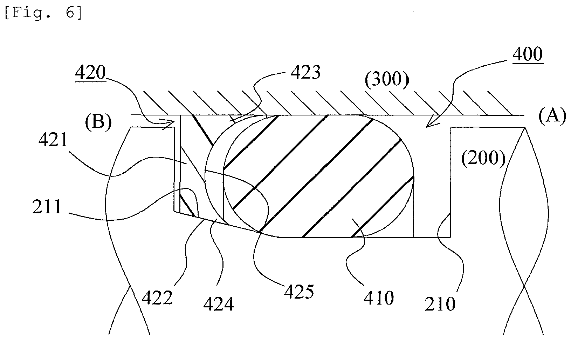

   Fig. 6 is a schematic cross-sectional view of a sealing structure according to a reference example.
[Fig. 7]
   Fig. 7 is a schematic cross-sectional view of a sealing structure according to a prior art example 1.
[Fig. 8]
   Fig. 8 is a schematic cross-sectional view of the sealing structure according to the prior art example 1.
[Fig. 9]
   Fig. 9 is a schematic cross-sectional view of a sealing structure according to a prior art example 2.

### [Description of Embodiments]

Modes for carrying out this invention will be hereinafter illustratively described in detail based on specific embodiments with reference to the drawings. It should be noted that, unless otherwise particularly specified, the sizes, materials, shapes, and relative arrangement or the like of constituent components described in this embodiment are not intended to limit the scope of this invention.

### (Embodiment 1)

A sealing device and a sealing structure according to Embodiment 1 of the present invention will be described with reference to Fig. 1 to Fig. 3. Fig. 1 is a schematic cross-sectional view of the sealing device according to Embodiment 1 of the present invention. Fig. 1 shows partially broken cross-sectional views of each of an O-ring 10 and a back-up ring 20 that form a sealing device 100. Fig. 2 and Fig. 3 are schematic cross-sectional views of the sealing structure according to Embodiment 1 of the present invention. Fig. 2 shows a state where there is no difference in fluid pressure between both sides of the sealing device, while Fig. 3 shows a state where there is a difference in fluid pressure between both sides of the sealing device.

### <Sealing device>

The configuration of the sealing device 100 will be described. The sealing device 100 of this embodiment is formed by the O-ring 10 made of a rubber-like elastic material, and the back-up ring 20 made of resin. The materials of the back-up ring 20 that can be employed include hard resin materials such as nylon, polyphenylene sulfide (PPS), polyacetal (POM), polyamide (PA), polyetheretherketone (PEEK), and the like, and soft resin materials such as polytetrafluoroethylene (PTFE), copolymer of tetrafluoroethylene and perfluoroalkyl vinyl ether (PFA), and the like.

The sealing device 100 according to this embodiment is mounted in an annular groove 210 formed in an outer circumferential surface of a shaft 200. The O-ring 10 is mounted in the annular groove 210 on a sealed fluid side (A), while the back-up ring 20 is mounted on the opposite side to the sealed fluid side (A) relative to the O-ring 10 in the annular groove 210. This back-up ring 20 serves the function of preventing the O-ring 10 from coming out of the annular groove 210. Hereinafter, for convenience of explanation, the opposite side to the sealed fluid side (A) will be referred to as "opposite side (B)".

The back-up ring 20 includes an annular and planar body part 21, and an annular protruding portion 23 protruding toward the sealed fluid side (A) on the radially outer side of the body part 21. The body part 21 is flat on both sides (the sealed fluid side (A) and the opposite side (B)). The inner circumferential surface of the body part 21 is formed as a tapered surface 22. At the bottom on the opposite side (B) in the annular groove 210 of the shaft 200 is provided a tapered surface 211 radially increasing from the sealed fluid side (A) to the opposite side (B). The tapered surface 22, which is the inner circumferential surface of the body part 21 of the back-up ring 20, is designed slidable on the tapered surface 211 formed at the bottom of the annular groove 210 within the range of this tapered surface 211. In other words, the tapered surface 22, which is the inner circumferential surface of the body part 21, does not move beyond the range of the tapered surface 211 of the annular groove 210 toward the sealed fluid side (A). Therefore, when the O-ring 10 is subjected to fluid pressure and makes tight contact with the back-up ring 20, an inner circumferential part on the opposite side (B) of the O-ring 10 makes tight contact with the tapered surface 211 provided at the bottom of the annular groove 210.

The inner circumferential surface of the annular protruding portion 23 of the back-up ring 20 in this embodiment is formed as a tapered surface 24 that is an inclined surface radially increasing toward the sealed fluid side (A).

### <Sealing structure>

The sealing structure according to this embodiment will be described. The sealing structure according to this embodiment is formed by the shaft 200 having the annular groove 210 in an outer circumferential surface, a housing 300 having a shaft hole for this shaft 200 to pass through, and the sealing device 100 that seals an annular groove between the shaft 200 and the housing 300. More specifically, the sealing device 100 is mounted in the annular groove 210 provided to the shaft 200 and seals the annular gap between the shaft 200 and the shaft hole in the housing 300.

As described above, the O-ring 10 of the sealing device 100 is mounted in the annular groove 210 on the sealed fluid side (A). The back-up ring 20 is mounted in the annular groove 210 on the opposite side (B) from the sealed fluid side (A) relative to the O-ring 10. The inner circumferential surface (tapered surface 22) of the body part 21 of the back-up ring 20 is designed slidable on the tapered surface 211 formed at the bottom of the annular groove 210 within the range of this tapered surface 211.

In the sealing structure configured as described above, when there is no difference in fluid pressure between the sealed fluid side (A) and the opposite side (B), inner and outer circumferential parts on the opposite side (B) of the O-ring 10 are separated from the back-up ring 20 (see Fig. 2). On the other hand, when the fluid pressure on the sealed fluid side (A) becomes higher than the fluid pressure on the opposite side (B), part of the O-ring 10 on the opposite side (B) undergoes deformation so that there is no longer a gap between the O-ring 10 and the back-up ring 20 (see Fig. 3). Namely, end portions on the opposite side (B) of the O-ring 10 make tight contact with the surface on the sealed fluid side (A) of the body part 21 of the back-up ring 20. The inner circumferential part on the opposite side (B) of the O-ring 10 makes tight contact with the tapered surface 211 provided at the bottom of the annular groove 210. Further, the outer circumferential part on the opposite side (B) of the O-ring 10 makes tight contact with the inner circumferential surface (tapered surface 24) of the annular protruding portion 23 of the back-up ring 20.

### <Excellent features of sealing structure and sealing device according to this embodiment>

As described above, in the sealing structure and sealing device 100 according to this embodiment, the inner circumferential surface (tapered surface 22) of the body part 21 of the back-up ring 20 is designed slidable on the tapered surface 211 formed at the bottom of the annular groove 210. Therefore, even when the distance between the bottom of the annular groove 210 and the inner circumferential surface of the shaft hole in the housing 300 varies by some eccentricity of the shaft 200, the back-up ring 20 can prevent formation of a gap between the back-up ring 20 and the tapered surface 211, and between the back-up ring 20 and the inner circumferential surface of the shaft hole in the housing 300, by moving along the axial direction. Accordingly, part of the O-ring 10 is less likely to get caught between the back-up ring 20 and the groove bottom, or between the back-up ring 20 and the inner circumferential surface of the shaft hole in the housing 300, and damaged. This way, the sealing structure and sealing device 100 according to this embodiment can maintain the sealing properties stably even in conditions where there is eccentricity of the shaft 200.

In this embodiment, when the fluid pressure on the sealed fluid side (A) becomes higher than the fluid pressure on the opposite side (B), an inner circumferential part on the opposite side (B) of the O-ring 10 makes tight contact with the tapered surface 211 provided at the bottom of the annular groove 210, and an outer circumferential part on the opposite side (B) of the O-ring 10 makes tight contact with the inner circumferential surface (tapered surface 24) of the annular protruding portion 23 of the back-up ring 20. This way, when the O-ring 10 transforms from the state separated from the back-up ring 20 to the state in tight contact with the back-up ring 20, the O-ring 10 itself does not undergo a large deformation. Therefore, wear of the O-ring 10 can be reduced even when the sealing device 100 is used in an environment where there is cyclic variation in fluid pressure such as injector pipes. Thus the sealing structure and sealing device 100 according to this embodiment can maintain the sealing properties over a long time even in an environment where there is cyclic variation in fluid pressure.

The thinner the body part 21 of the back-up ring 20, the better the back-up ring 20 can follow the eccentricity. The more the annular protruding portion 23 of the back-up ring 20 protrudes, the less the O-ring 10 will deform. The body part 21 may have a thickness (along the axial direction) suitably set within a range of, for example, from 0.7 mm to 1.5 mm. The maximum thickness of part of the back-up ring 20 where the annular protruding portion 23 is provided (thickness along the axial direction of the radially outer side portion) may be suitably set within a range of, for example, from 1.5 mm to 3.0 mm. The thicker this annular protruding portion 23, the less likely the O-ring will deform, so that the radially outer side portion of the back-up ring 20 will be prevented from coming out of the annular groove 210. Accordingly, when a soft resin material is used for the material of the back-up ring 20, which is more prone to deformation as compared to hard resin materials, increasing the thickness of this annular protruding portion 23 will be effective.

### (Embodiment 2)

Fig. 4 shows Embodiment 2 of the present invention. This embodiment will be described in regard to a back-up ring with a configuration different from that of Embodiment 1. Basic configuration and the effects are the same as those of Embodiment 1, and therefore the same constituent elements are given the same reference numerals and will not be described again. Fig. 4 is a schematic cross-sectional view of a sealing device according to Embodiment 2 of the present invention.

A sealing device 100 of this embodiment is formed by an O-ring 10 made of a rubber-like elastic material, and a back-up ring 20 made of resin, similarly to Embodiment 1. The O-ring 10 itself has the same configuration as that of Embodiment 1, and therefore will not be described again. Applicable materials of the back-up ring 20 in this embodiment are as has been mentioned in Embodiment 1 described above.

The back-up ring 20 according to this embodiment includes, similarly to Embodiment 1, an annular and planar body part 21, and an annular protruding portion 23 protruding toward the sealed fluid side on the radially outer side of the body part 21. The inner circumferential surface of the body part 21 is formed as a tapered surface 22. The inner circumferential surface of the annular protruding portion 23 of the back-up ring 20 in this embodiment is formed as a tapered surface 24 that is an inclined surface radially increasing toward the sealed fluid side.

In the back-up ring 20 of this embodiment, the flat part on the sealed fluid side of the body part 21 and the inner circumferential surface (tapered surface 24) of the annular protruding portion 23 are connected via a curved surface 25. This curved surface 25 is the only difference from the back-up ring 20 according to Embodiment 1 described above. In the back-up ring 20 according to Embodiment 1 described above, when a hard resin material is used for the material of the back-up ring 20, there is a worry that cracks can easily form at the point where the flat part of the body part 21 on the sealed fluid side and the inner circumferential surface (tapered surface 24) of the annular protruding portion 23 meet. Generation of such cracks can be minimized by connecting the flat part of the body part 21 on the sealed fluid side and the inner circumferential surface (tapered surface 24) of the annular protruding portion 23 via the curved surface 25 as in the back-up ring 20 of this embodiment.

The sealing structure has the same configuration as that of Embodiment 1, and therefore will not be described again.

The same effects as those of Embodiment 1 can be achieved by the sealing structure and sealing device 100 according to this embodiment, too. With this embodiment, even when a hard resin material is used for the material of the back-up ring 20, generation of cracks between the flat part of the body part 21 on the sealed fluid side and the inner circumferential surface (tapered surface 24) of the annular protruding portion 23 can be minimized. Accordingly, nylon, which is generally inexpensive, can be adopted as the material of the back-up ring 20.

### (Embodiment 3)

Fig. 5 shows Embodiment 3 of the present invention. This embodiment will be described in regard to a back-up ring with a configuration different from that of Embodiment 1. Basic configuration and the effects are the same as those of Embodiment 1, and therefore the same constituent elements are given the same reference numerals and will not be described again. Fig. 5 is a schematic cross-sectional view of a sealing device according to Embodiment 3 of the present invention.

A sealing device 100 of this embodiment is formed by an O-ring 10 made of a rubber-like elastic material, and a back-up ring 20 made of resin, similarly to Embodiment 1. The O-ring 10 itself has the same configuration as that of Embodiment 1, and therefore will not be described again. Applicable materials of the back-up ring 20 in this embodiment are as has been mentioned in Embodiment 1 described above.

The back-up ring 20 according to this embodiment includes, similarly to Embodiment 1, an annular and planar body part 21, and an annular protruding portion 23 protruding toward the sealed fluid side on the radially outer side of the body part 21. The inner circumferential surface of the body part 21 is formed as a tapered surface 22.

In the back-up ring 20 according to this embodiment, the inner circumferential surface of the annular protruding portion 23 is not formed as a tapered surface but as an inclined surface with a circular arc cross section (curved surface 26). This curved surface 26, which forms the inner circumferential surface of the annular protruding portion 23 in place of the tapered surface, is the only difference from the back-up ring 20 according to Embodiment 1 described above. This curved surface 26 smoothly connects to the flat part of the body part 21 on the sealed fluid side.

The sealing structure has the same configuration as that of Embodiment 1, and therefore will not be described again.

The same effects as those of Embodiment 1 can be achieved by the sealing structure and sealing device 100 according to this embodiment, too. Also, with this embodiment, since the curved surface 26 that is the inner circumferential surface of the annular protruding portion 23 smoothly connects to the flat part of the body part 21 on the sealed fluid side, the same effects as those of Embodiment 2 can be achieved.

### (Reference example)

A sealing device and a sealing structure according to a reference example will be described with reference to Fig. 6. Fig. 6 is a schematic cross-sectional view of the sealing structure according to the reference example. Fig. 6 shows a state where there is no difference in fluid pressure between both sides of the sealing device.

A sealing device 400 of this reference example is formed by an O-ring 410 made of a rubber-like elastic material, and a back-up ring 420 made of resin, similarly to Embodiment 1. The O-ring 410 has the same configuration as the O-ring 10 of Embodiment 1. Applicable materials of the back-up ring 420 according to this reference example are as has been mentioned in Embodiment 1 described above.

The back-up ring 420 according to the reference example has an annular body part 421. The back-up ring is similar to the back-up ring 20 of Embodiment 1 in that the inner circumferential surface of its body part 421 is formed as a tapered surface 422. In this reference example, the entire surface of the body part 421 on a sealed fluid side (A) is not flat but formed as a curved surface 425 with a circular arc cross section. Therefore, there are annular protruding portions 423 and 424 each protruding toward the sealed fluid side (A) on the radially outer and inner sides of the body part 421, respectively.

The same effects as those of the embodiments described above can be achieved by the sealing structure and sealing device 400 according to the reference example configured as described above. In this reference example, however, the annular protruding portion 424 is provided also on the radially inner side of the back-up ring 420. As compared to the embodiments described above, the back-up ring 420 slides along the axial direction less easily, because of the annular protruding portion 424 being pressed radially inwards by the O-ring 410. This means that the back-up ring has a poorer ability to follow the shaft eccentricity as compared to the sealing device 100 according to the embodiments described above. Moreover, the back-up ring 420 according to this reference example has a shape with pointed edges on the sealed fluid side (A) both on the radially inner and outer sides. Therefore, it is hard to achieve a high dimensional accuracy of this back-up ring 420 that is formed by molding. Moreover, since the inner circumferential surface of the body part 421 is formed as a tapered surface 422, the mold for forming the back-up ring 420 without an undercut needs to be designed to open up in the axial direction, and the parting surface of the mold will have to move past the tip of the annular protruding portion 424. The mold with such a configuration poses another problem, i.e., it does not allow easy removal of the molded product because the back-up ring 420 is embedded inside one of the mold halves when the mold is opened up.

### [Reference Signs List]

- 10: O-ring
- 20: Back-up ring
- 21: Body part
- 22: Tapered surface
- 23: Annular protruding portion
- 24: Tapered surface
- 25: Curved surface
- 26: Curved surface
- 100: Sealing device
- 200: Shaft
- 210: Annular groove
- 211: Tapered surface
- 300: Housing

## Claims

1. A sealing structure, comprising:
a shaft having an annular groove in an outer circumferential surface;
a housing having a shaft hole for the shaft to pass through; and
a sealing device mounted in the annular groove and sealing an annular gap between the shaft and the shaft hole, wherein
the annular groove includes a first tapered surface at a bottom on an opposite side to a sealed fluid side, the diameter of the first tapered surface increasing from the sealed fluid side to the opposite side,
the sealing device includes
an O-ring made of a rubber-like elastic material mounted on the sealed fluid side of the annular groove, and
a back-up ring that is made of resin, is mounted on the opposite side of the annular groove from the O-ring and prevents the O-ring from coming out of the annular groove,
the back-up ring includes an annular and planar body part, and an annular protruding portion protruding toward the sealed fluid side on a radially outer side of the body part,
an inner circumferential surface of the body part has a second tapered surface capable of sliding on the first tapered surface formed at the bottom of the annular groove, the second tapered surface being capable of sliding within a range of the first tapered surface, and
an inner circumferential surface of the annular protruding portion has an inclined surface whose diameter increases toward the sealed fluid side.

2. A sealing device that is mounted in an annular groove formed in an outer circumferential surface of a shaft and seals an annular gap between the shaft and a housing having a shaft hole for the shaft to pass through,
the annular groove including a first tapered surface at a bottom on an opposite side to a sealed fluid side, the diameter of the first tapered surface increasing from the sealed fluid side to the opposite side,
the sealing device comprising:
an O-ring made of a rubber-like elastic material mounted on the sealed fluid side of the annular groove; and
a back-up ring that is made of resin, is mounted on the opposite side of the annular groove from the O-ring and prevents the O-ring from coming out of the annular groove, wherein
the back-up ring includes an annular and planar body part, and an annular protruding portion protruding toward the sealed fluid side on a radially outer side of the body part,
an inner circumferential surface of the body part has a second tapered surface capable of sliding on the first tapered surface formed at the bottom of the annular groove, the second tapered surface being capable of sliding within a range of the first tapered surface, and
an inner circumferential surface that of the annular protruding portion has an inclined surface whose diameter increases toward the sealed fluid side.
